# EUROPEAN PATENT APPLICATION

(11) **EP 0 920 020 A1**
(43) Date of publication of application: **02.06.1999**
(21) Application number: 97203721.2
(22) Date of filing: 28.11.1997
(51) Int. Cl.: G11B 27/32, G11B 20/12, H04N 5/85

(54) **Organization and referencing of sets of information stored on an optical disk**

(71) Applicant: DEUTSCHE THOMSON-BRANDT GMBH, 30433 Hannover (DE)
(72) Inventor: Lhopital, Christophe, 92648 Boulogne Cedex (FR); Winter, Marco, 92648 Boulogne Cedex (FR)
(74) Representative: Zhang, Jianguo

(57) **Abstract**

A DVD is used to store a number of music titles greater than 99. The music titles are sets of information which comprise at least subsets for audio information and title information related to the music title. Each subset has a 12 character filename which is stored in a file directory and in which a number of characters greater or equal or 3 is used to indicate an index number of the set of information which includes the subset.

## Description

The present invention relates to an organization and referencing of sets of information stored on an optical disk.

Many kinds of information, e.g. audio information, video information, combined audio/video information, are typically presented in form of one or many sets. A set may comprise all the video or the combined audio/video information of a determined movie sequence, i.e. all the information making up pictures and/or a soundtrack. In another example, the set may contain all the audio information of a piece of music. A set of video information may be related to other information. This other information could for example be a title of the movie sequence recorded in the video information. The set of video information and a set containing the title related to this video information may be combined in a larger set of information thus becoming subsets of the latter. This larger set of information may have a type attributed to it, e.g. a movie type.

It is known to store larger sets of information of the movie type on an optical disk. An example for such an optical disk is a Digital Versatile Disk (DVD). Each set of information of the movie type comprises the subset of video information and the subset which contains title information related to the video information. The subset of video information and the subset containing the title information both have a filename which contains 12 characters. The filename may be split up in a plurality of components. According to a common practice the three first characters of the filenames are "VTS" and indicate that the subset belongs to a set of information of the movie type. A fourth characters is a "_" which serves the purpose of a separation character. The fifth and sixth characters are digits which are used to indicate a number from "01" to "99", which is an index number of the VTS type set of information which includes the subset. The seventh character again is a separating "_". The eighth to twelfth characters define the type of the subset. The type of the subset containing the title information for example is "0.IFO" and the subset containing video information may have the type "0.VOB". Other possible subsets also containing video information related to the same set of information of the VTS type may have the subset type "1.VOB", "2.VOB" up to "9.VOB".

The DVD optical disk as described thus allows to store 99 sets of information of the VTS type. This limitation in the number of sets of information is inherent to a format used in the filenames. However, the number 99 appears to be quite sufficient when storing sets of information of the movie type, i.e. a DVD will most likely store a number of movies smaller than 99. In practice, the most common case might be to store one movie on one disk.

The DVD is particularly suitable to store movies because of its storage capacity. However, it might be considered to use the DVD to store audio information also e.g. songs or music pieces. It may be considered to use the DVD for storing audio information only. The storage capacity available potentially allows to store a great number of music titles. The number of music titles could even be increased by using appropriate compression technique to compress audio information. However, the present DVD format for the filenames will not allow to store more than 99 titles.

It is an object of the present invention to increase the limit of the number of storable titles on a DVD.

According to the present invention a solution to the above mentioned problem is given by a method for referencing subsets of sets of information stored on an optical disk by attributing to each subset a filename of 12 characters. Each subset and each set of information have a type which belongs to a determined set of types. The method comprises the steps of indicating in the filename the type of the set of information which includes the subset by using a first number of characters, indicating in the filename an index number of the set of information which includes the subset by using a second number of characters, the second number being equal or greater than 3, and indicating in the filename the type of the subset by using a third number of characters.

The solution according to the invention allows to use a format for the filename which has the same number of characters as the common DVD filename but enables a number of titles greater than 99.

Another solution according to the invention is found in a file system for organizing subset of sets of information stored on an optical disk. Each of the sets of information and each of the subsets has a type which belongs to a determined set of types. Each of the subsets is identified by a filename of 12 characters stored in a file directory on the optical disk. The filename comprises a first number of characters which indicate the type of the set information which include the subset. A second number of characters which indicate an index number of the set of information which include the subset, the second number being equal or greater than 3, and a third number of characters which indicate the type of the subset.

Another solution to the above mentioned problem is according to the invention found in an optical disk for storing a plurality of subsets of sets of information and filenames of the subsets. Each of the subsets and sets of information has a type which belongs to a determined set of type. Each filename comprises at least 12 characters, a first number of which indicate the type of the sets of information which includes the subset, a second number of which indicate an index number of the set of information which includes the subset, the second number being equal or greater than 3, and a third number of which indicate the type of the subset.

An example will in the following be described to illustrate the invention. However the example is not limitative of the scope of the invention and one may well find other embodiments which lye in the scope of the invention.

A DVD is used to store sets of information of an audio type "A". Each set of information of the "A" type is used to represent one music title, i.e. one song or one piece of music. The set of information comprises for this purpose at least two subsets, one of which contains title information related to the music title, the other of which contains audio information. It is understood that further subsets may be comprised in the set of information. Each subset is referenced by a filename of 12 characters. All subset filenames for all the sets of information to be stored on the DVD are stored on the optical disk in a file directory in order that these filenames may easily be found on the DVD. The title information related to the music title may for example be plain text represented as a sequence of ASCII codes well known from a person skilled in the art. The audio information may for example be digitally encoded and compressed audio signals.

A type for the subset containing the title information may for example be indicated at the end in the filename of the subset by the characters "BOX". In a similar manner a type for the subset containing audio information may be indicated at the end in the filename of the subset by the characters ".AUD". Since the number of characters used in subset filenames is 12 and the number of characters used to indicates the type of the set of information "A" and the type of the subset ".BOX, .AUD" in total takes up 5 characters of the filename this leaves us with 7 characters of the filename to create an index.

The filenames of the subsets could for example have following format

"A_XXXXXX.BOX" or "A_XXXXXX.AUD", including one separating "_" and 6 digits (0 to 9 each) represented by "X". A part "XXXXXX" in the filename contains the index number of the "A" type set of information. This means that any number between "000000" and "999999" may be used to number a set of information. The file directory on the DVD could contain file names as represented in the following columns :
A₌000000.BOX A₌000001.BOX A₌001432.BOX
A₌000000.AUD A₌000001.AUD A₌001432.AUD
A₌000000.OTH A₌000001.OTH A₌001432.OTH

Each column contains the filenames of the subsets of different types, ".OTH" being another determined type of a subset, belonging to one set of information whose index number is indicated using 6 digits. In the described example there are 1433 sets of information with the "A_" type and comprising 3 subsets each.

Other formats of the filename using less digits and separating "_" instead may be considered if appropriate.

## Claims

1. Method for referencing subsets of sets of information stored on an optical disk by attributing to each subset a file name of 12 characters, each subset and each set of information having a type which belongs to a determined set of types, comprising the steps of
- indicating in said filename the type of the set of information which includes the subset by using a first number of characters,
- indicating in said filename an index number of the set of information which includes the subset by using a second number of characters, said second number being equal or greater than three,
- indicating in said filename the type of the subset by using a third number of characters.

2. Method for referencing according to claim 1, characterized in that said step of indicating in said filename an index number is done using said second number of digits.

3. A file system for organizing subsets of sets of information stored on an optical disk, each of said sets of information and each of said subsets having a type which belongs to a determined set of types, each of said subsets being identified by a filename of 12 characters stored in a file directory on said optical disk, said filename comprising a first number of characters which indicate the type of the set of information which includes the subset, a second number of characters which indicate an index number of the set of information which includes the subset, said second number being equal or greater than three, and a third number of characters which indicate the type of the subset.

4. An optical disk for storing a plurality of subsets of sets of information and filenames of said subsets, each of said subsets and sets of information having a type which belongs to a determined set of types, each filename comprising at least 12 characters, a first number of which indicate the type of the set of information which includes the subset, a second number of which indicate an index number of the set of information which includes the subset, said second number being equal or greater than three, and a third number of which indicate the type of the subset.
